(19) **Europäisches Patentamt**
**European Patent Office**
**Office européen des brevets**

(11) **EP 1 607 718 B1**

(12) **EUROPEAN PATENT SPECIFICATION**

(45) Date of publication and mention
of the grant of the patent:
**23.09.2015 Bulletin 2015/39**

(51) Int Cl.:
***G01C 15/00*** *(2006.01)* ***G01C 11/06*** *(2006.01)*

(21) Application number: **05012755.4**

(22) Date of filing: **14.06.2005**

(54) **Surveying instrument and electronic storage medium**

Vermessungsinstrument und elektronisches Speichermedium

Instrument d'arpentage et support d'enrégistrement électronique

(84) Designated Contracting States:
**CH DE LI SE**

(30) Priority: **15.06.2004 JP 2004177650**

(43) Date of publication of application:
**21.12.2005 Bulletin 2005/51**

(73) Proprietor: **Kabushiki Kaisha TOPCON**
**Tokyo 174-8580 (JP)**

(72) Inventors:
• **Ohtomo, Fumio**
**Itabashi-ku**
**Tokyo 174-8580 (JP)**

• **Ohtani, Hitoshi**
**Itabashi-ku**
**Tokyo 174-8580 (JP)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**EP-A1- 0 964 223      EP-A2- 1 335 184**
**DE-A1- 10 328 828      US-A1- 2004 004 706**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to a three-dimensional surveying instrument used to calculate three-dimensional coordinate data by use of a surveying instrument and an imaging unit, and more particularly to a three-dimensional surveying instrument that is capable of determining positions of corresponding points by use of a surveying instrument at a surveying site so as to generate data, stereo displaying of which can be performed.

Heretofore, when three-dimensional coordinates are acquired from image data, it is necessary to use, for example, imaging means such as a digital camera, and a reference structure, the dimensions of which are known. The reference structure is placed in proximity to an object that is a target to be measured. Then, this reference structure is imaged by a camera from two directions or from a plurality of directions. This camera is equipped with an inclinometer used to measure a tilt of an image in the front and back, and right and left, directions. Here, the dimensions of the reference structure are known. For example, a triangular structure is used. A position at which imaging is performed by the camera, and a position at which the reference structure is placed, are measured positions. The relative positional relationship between the object to be measured and each of the measured points is known beforehand.

From this imaging position, imaging is performed with such composition that the object as the target to be measured and the reference structure are imaged at the same time. Judging from the reference structure, the imaging position, and a position on an acquired image, the relationship among them is determined by means of absolute orientation so as to calculate three-dimensional coordinates of the object that is the target to be measured.

US 2004/004706 (A1) discloses an automatic surveying system comprising a surveying device, a collinear-line calculating processor, a sighting direction control processor, and an object-point searching processor. The collinear line calculating processor obtains a collinear line for an arbitrarily designated point on a schematic image of which the positional relation to the surveying device is known.

DE 103 28 828 (A1) discloses a display that displays arbitrary observation points with respect to predefined reference points of a survey field in a general-view image of the survey field based on positional relationship of standard surveying coordinate system and survey field image.

EP 0 964 223 (A1) discloses an image forming process for making an image drawing (ortho-image) in an actual place while confirming it in real time. Measuring of control points is performed, and preparation is made for forming an ortho-image based on image data thereof and survey data. Where photographing is carried out from a plurality of directions, additional image measuring is performed.

EP 1335 184 (A2) discloses an image forming method comprising an image input function, to which a plurality of images including control points or orienting points overlapped with one another are inputted; a storage function for previously storing ground coordinate values of control points or orienting points; and an orthogonally projected image (ortho-image) forming function for forming an ortho-image from plurality of images inputted by said image input function based on image coordinate values.

However, to perform the conventional absolute orientation, the reference structure, the dimensions of which are known, and the like, must be placed beforehand.

In addition, a position at which the reference structure is placed, and a position of the camera used for imaging, must also be measured. Placing the reference structure and the camera, and measuring positions thereof, are very troublesome. In the case of a building, or the like, its dimensions are gigantic, which is accompanied by great difficulty. This was the problem to be solved. Moreover, an imaging posture cannot be measured without providing the camera with the inclinometer for detecting a tilt. Such a special camera, therefore, becomes extremely expensive. This was another problem to be solved.

SUMMARY OF THE INVENTION

These problems are solved by the invention as defined in the independent claims; embodiments of the invention are defined in the dependent claims.

According to one aspect, there is provided a three-dimensional surveying instrument that calculates data used for three-dimensional displaying on a screen such as a display, said three-dimensional surveying instrument comprising: a digital camera for performing stereo imaging; and a surveying instrument (total station) having a distance measuring function used to determine coordinates of corresponding points (path points) of a stereo image.

BRIEF DESCRIPTION OF THE DRAWINGS

Drawings illustrating embodiments of the present invention will be listed as below.

Fig. 1 is a diagram illustrating a first embodiment of the present invention;
Fig. 2 is a diagram illustrating the first embodiment of the present invention;
Fig. 3 is a diagram illustrating the first embodiment of the present invention;
Fig. 4 is a diagram illustrating the first embodiment of the present invention;
Fig. 5 is a diagram illustrating a surveying instrument 1000 according to the first embodiment;
Fig. 6 is a diagram illustrating a configuration of the surveying instrument 1000 according to the first embodiment;
Fig. 7 is a diagram illustrating another configuration of the surveying instrument 1000 according to the first embodiment; and
Fig. 8 is a diagram illustrating working of this embodiment.

## DESCRIPTION OF THE INVENTION

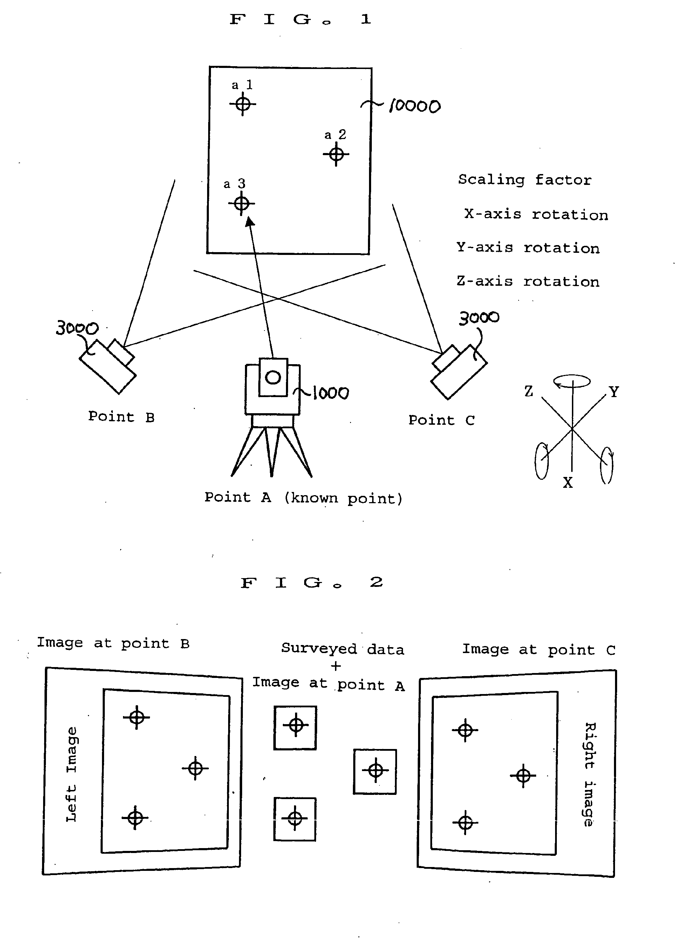

A first embodiment in which a target mark is not used as a path point will be described with reference to Figs. 1 and 2. In this first embodiment, a surveying instrument 1000 is equipped with an imaging unit.

The surveying instrument 1000 comprises the imaging unit capable of inputting an image in a collimation direction. As a distance measuring function, the surveying instrument 1000 has a non-prism function that catches a direct reflection from a natural object, and that does not require a reflecting prism.

As shown in Figs. 1 and 2, the surveying instrument 1000 collimates an arbitrary part of a target to be measured so that the distance is measured. In addition, the surveying instrument 1000 measures a horizontal angle and an angular height in like manner. Then, the imaging unit acquires an image at a surveying point. Because a collimation point is the center of an optical axis, the collimation point agrees with the center of the image. Because the surveying point becomes a path point, survey values and images at least at three positions are acquired.

After the surveying, images are acquired at least from two directions by use of a digital camera 3000.

Next, image data of the digital camera 3000 is inputted into the surveying instrument 1000 where the stereo image of the digital camera 3000 is matched with the images acquired at three points by use of the surveying instrument 1000. Then, single photo orientation is performed. More specifically, a scaling factor, the luminance, and the rotation, of the stereo image are corrected according to position coordinates at three points. The path point is determined on the basis of the single photo orientation.

After determining a plurality of path points, the data is transferred to, for example, a personal computer placed in an office. Then, mutual orientation is performed to determine the relative relationship between the digital cameras 3000 that have acquired the right and left images respectively. As a result, the relative positional relationship of points forming the target to be measured 10000 is determined. The absolute orientation is performed by use of data based on the mutual orientation so as to convert the data into that in a ground coordinate system. In addition, the data can also be displayed on a screen as an ortho image on the basis of the positional relationship determined by the mutual orientation.

Incidentally, the imaging unit is used to convert data of an image device into digital data. The imaging unit is, for example, a solid-state image sensing device such as a CCD. This imaging unit comprises: an imaging element 110 formed of a CCD, or the like; and an image circuit 120 for generating an image signal from an output signal of the imaging element 110.

First Embodiment

The first embodiment will be described with reference to Figs. 1 through 4.

The first embodiment in which a target mark is not used as a path point will be described with reference to Figs. 1 and 2. In this first embodiment, the surveying instrument 1000 is equipped with the imaging unit.

The surveying instrument 1000 comprises the imaging unit capable of inputting an image in a collimation direction. As a distance measuring function, the surveying instrument 1000 has a non-prism function that catches a direct reflection from a natural object, and that does not require a reflecting prism.

The surveying instrument 1000 collimates an arbitrary part of a target to be measured so that the distance is measured. In addition, the surveying instrument 1000 also measures a horizontal angle and an vertical angle in like manner. Then, the imaging unit 100 acquires an image at a surveying point. Because a collimation point is the center of an optical axis, the collimation point agrees with the center of the image. Because the surveying point becomes a path point, survey values and images at least at three positions are acquired.

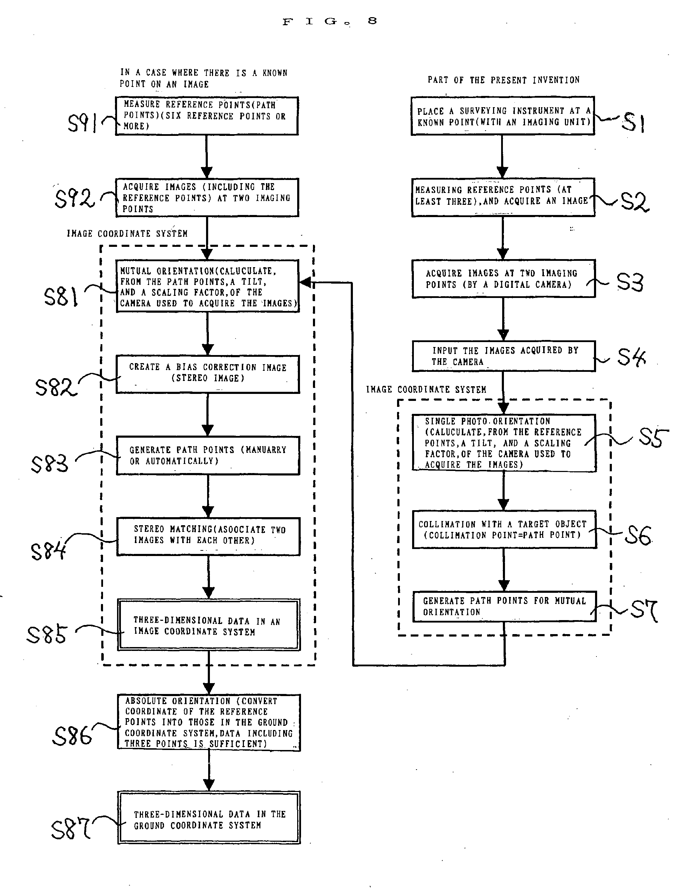

This embodiment will be described in detail with reference to Fig. 8. First of all, in a step 1 (hereinafter abbreviated as "S1"), as shown in Fig. 1, the surveying instrument 1000 equipped with an imaging unit is placed at a point A that is a known point. In this embodiment, the imaging unit which is built into the surveying instrument 1000 is adopted as this imaging unit.

Next, in a S2, reference points are measured by use of the surveying instrument 1000. In this embodiment, as shown in Fig. 1, the reference points are a1, a2, and a3; and accordingly the number of the reference points is three.

Here, these three reference points a1, a2 and a3 are measured by use of the surveying instrument 1000. At the same time, images including the reference points are picked up by use of the imaging unit.

Moreover, in S3, as shown in Figs. 1 and 2, the digital camera 3000 is moved to a point B, and is then moved to a point C, so as to pick up an image including the reference points. To be more specific, the digital camera 3000 is placed at the points B and C, and the target to be measured 10000 and the image including the reference points a1, a2, a3 are picked up in stereo. As shown in Fig. 2, the stereo image is picked up by the digital camera 3000 from at least two directions (from the right and left directions). It is to be noted that although in this embodiment the stereo image is picked up by moving the digital camera 3000 to those points, a set of stereo cameras may also be separately prepared.

Incidentally, as for the digital camera 3000, it is desirable that the distortion of the image caused by the property of a lens be known beforehand.

After that, in S4, image data which has been acquired by the digital camera 3000 is inputted into the surveying instrument 1000.

Next, in S5, the single photo orientation is performed.

More specifically, the single photo orientation is performed as follows: determining, by use of collinear conditions that hold based on reference points imaged in a piece of photograph, a position $(X_\theta, Y_\theta, Z_\theta)$ of the digital camera 3000 by which a photograph is taken, and a tilt $(\omega, \varphi, \kappa;$ roll, pitch, angle of yaw) of the digital camera 3000; and thereby determining the relationship between photograph coordinates (x, y) and ground coordinates (X, Y, Z).

The position $(X_\theta, Y_\theta, Z_\theta)$ of the digital camera 3000 and the tilt $(\omega, \varphi, \kappa;$ roll, pitch, angle of yaw) of the digital camera 3000 are called external orientation elements. As a result, it is possible to calculate the tilt, a scaling factor, and the like, of the digital camera 3000 from the reference points.

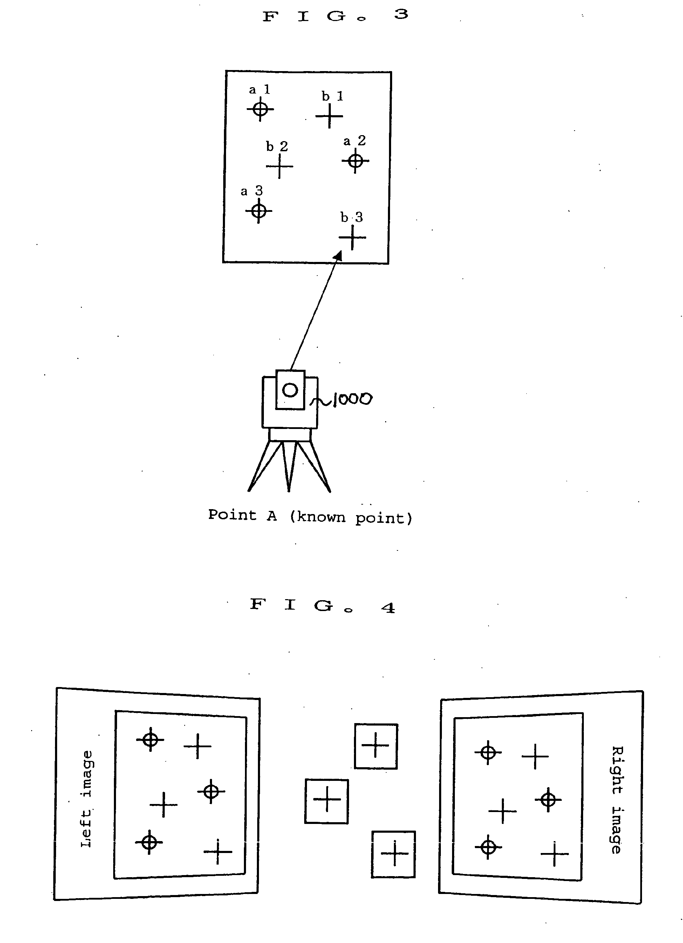

Next, in S6, collimation is performed by the surveying instrument 1000 so that path points to the target 10000 to be measured are generated. To be more specific, the surveying instrument 1000 equipped with the imaging unit is placed at the point A that is a known point, and then the collimation at a desired point is performed. In this embodiment, as shown in Figs. 3 and 4, collimation points b1, b2 and b3 are collimated so that angle parts of the target 10000 to be measured become path points.

In S7, as the path points, collimation points are generated on the image of the individual digital camera 3000. To be more specific, in the S7, the path points used to perform the mutual orientation are formed. The path points are formed on the stereo image according to the position coordinates at three points. In the case of a plane, six points or more are required to perform the stereo image measurement. In the case of a building, or the like, a large number of points are required for the stereo image measurement if necessary.

Next, in S81, the collimation points (path points) acquired in the S7 are used to perform the mutual orientation. In the S81, it is possible to calculate from the path points the relationship between, for example, the tilt, and the scaling factor, of the stereo image of the digital camera 3000.

After that, in S82, a bias correction image is created. The bias correction image is used to associate the path points of the stereo image with one another. The bias correction image in the S82 is created by slanting shadow conversion. The slanting shadow conversion is such conversion that photograph coordinates at a certain point on a light receiving element of the digital camera 3000 are projected on another plane. Here, feature points are extracted from one image, and then the same horizontal line of another image is searched for corresponding points.

Accordingly, a conversion needs to be made into an image on which a projection is made after the digital camera 3000 is moved in parallel in the horizontal direction. To be more specific, as if the image to be used were picked up after horizontally moving the digital camera 3000, the conversion into the image needs to be made. Such conversion makes it possible to search for the corresponding points even in the case of an image acquired by naturally moving the digital camera 3000. Moreover, in S83, path points are generated manually or automatically.

Then, in S84, stereo matching is performed. This stereo matching is a technique for automatically searching for corresponding points of two images that has been picked up.

Next, in S85, by use of the corresponding points that have been searched for in the S84, it is possible to determine the relative relationship between the digital cameras 3000 that have picked up the right and left images respectively. This makes it possible to define a three-dimensional coordinate system about an optical axis of the left camera.

This makes it possible to define a three-dimensional coordinate system about an optical axis of the one digital camera 3000.

Next, in S86, absolute orientation is performed. To be more specific, coordinate positions of the path points which have been measured by the surveying instrument 1000 are given to a model coordinate system acquired by the mutual orientation so as to convert into the ground coordinate system.

The conversion is made by giving three-dimensional coordinate values measured on the ground to points on the image.

Next, in S87, a conversion into three-dimensional data in the ground coordinate system is made. For example, it is possible to display an ortho image, which is developed on the basis of this data.

Here, the ortho image will be described. A photograph which is taken by a camera is a center projection photograph, whereas a photograph on which a normal oblique projection of the center projection photograph is made is called an orthophoto. Here, in the case of a map, a scale on the map is uniform. However, because the center projection photograph is taken through a lens, a scale on the photograph is not uniform as a whole. In contrast to this, because the orthophoto is based on the normal oblique projection, a scale on the orthophoto is uniform. Accordingly, the orthophoto can be handled in the same manner as that of the map.

An image of the digital camera 3000 is constituted of data, the unit of which is pixel. As a result of the mutual orientation and the absolute orientation, each pixel is provided with coordinates. In the case of two-dimensional displaying by use of a display, or the like, shading is added to the two-dimensional displaying in response to three-dimensional coordinates. At the time of coordinate conversion, coordinates are newly calculated on a pixel basis, and the calculated coordinates are then displayed as operation such as rotation.

As described above, the first embodiment relates to a three-dimensional surveying instrument that calculates three-dimensional coordinate data by use of the surveying instrument 1000 and the digital camera 3000, and that is capable of displaying the three-dimensional coordinate data in stereo.

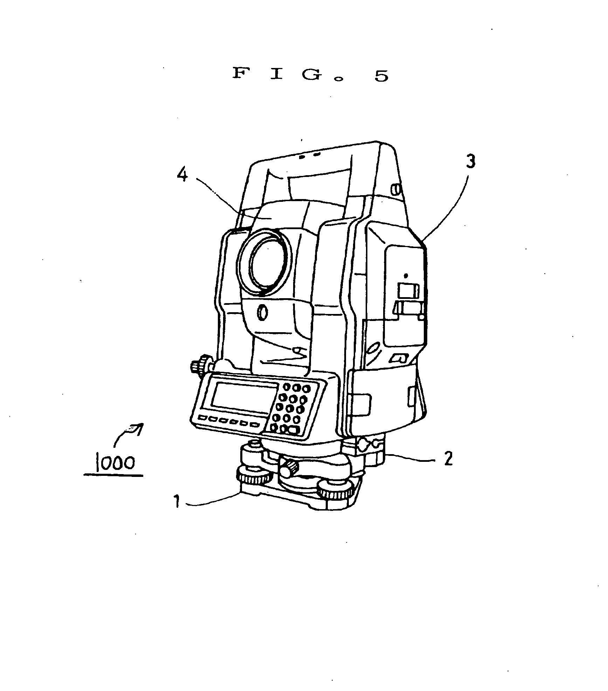

As shown in Figs. 4 and 5, the surveying instrument 1000 is a total station, which comprises an electronic theodolite for detecting angles (a vertical angle and a horizontal angle), and a light-wave range finder.

It is to be noted that, in this embodiment, the surveying instrument 1000 and the digital camera 3000 are separately configured.

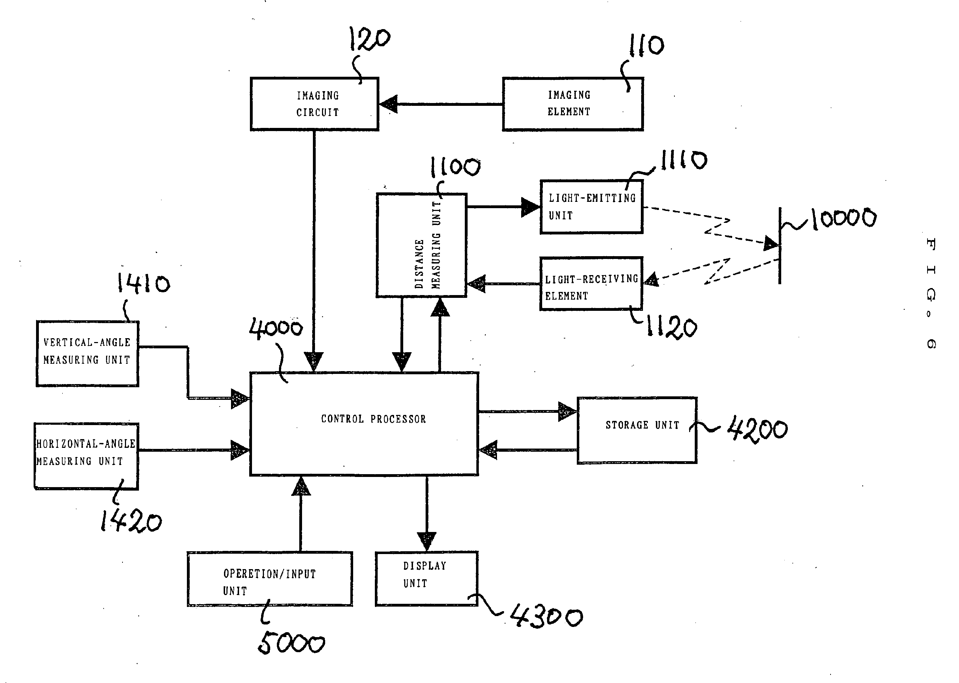

Next, an electric configuration of the surveying instrument 1000 according to this embodiment will be described with reference to Fig. 6.

The surveying instrument 1000 comprises a distance measuring unit 1100, an angle measuring unit 1400, a storage unit 4200, a display unit 4300, a control processor 4000, and an operation/input unit 5000. Here, the storage unit 4200 is used to store data, programs, and the like. The display unit 4300 and the operation/input unit 5000 enable users to operate the surveying instrument 1000.

The distance measuring unit 1100 uses the light-wave range finder. The distance measuring unit 1100 is used to measure the distance to a target to be measured on the basis of, for example, the phase difference, and the time difference, of reflected light. The distance measuring unit 1100 comprises a light emitting unit 1110 and a light receiving unit 1120. The light emitting unit 1110 emits a distance measuring light beam in a direction of the target to be measured. A light beam reflected from the target to be measured enters into the light receiving unit 1120, and thereby the distance to the target to be measured can be measured.

To be more specific, the distance from the surveying instrument 1000 to the target to be measured is calculated by the time difference from a point of time at which the light emitting unit 1110 emits pulses of light until the light receiving unit 1120 receives the pulses of light. It is to be noted that this arithmetic operation is executed by the control processor 4000.

The angle measuring unit 1400 is used to calculate a horizontal angle and an angular height. The angle measuring unit 1400 comprises a vertical-angle angle measuring unit 1410 and a horizontal-angle angle measuring unit 1420.

The vertical-angle angle measuring unit 1410 can detect the amount of up and down rotation as the level or the zenith by use of, for example, an angular height encoder. As for the horizontal-angle angle measuring unit 1420, for example, a horizontal angle encoder can detect the amount of horizontal rotation relative to a reference direction. These encoders comprises, for example, a rotor mounted on a pivoting unit, and a stator including a fixed unit.

It is so devised that the angle measuring unit 1400, which comprises the vertical-angle angle measuring unit 1410 and the horizontal-angle angle measuring unit 1420, calculates a horizontal angle and an angular height on the basis of the detected amount of horizontal rotation and the detected amount of up and down rotation.

The surveying instrument 1000 is equipped with the imaging unit that includes an imaging element 110 and an image circuit 120. This imaging unit may be configured to be built into the surveying instrument 1000, or may also be configured as a separate unit that is connected to the surveying instrument 1000.

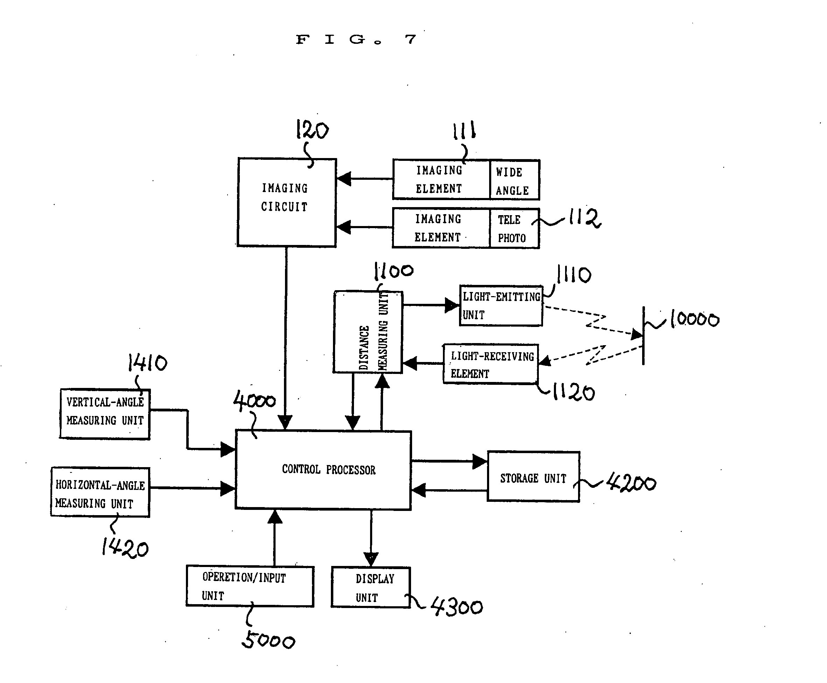

Incidentally, as shown in Fig. 7, the imaging unit can also be configured to be switchable between a wide-angle imaging element 111 and a telephoto imaging element 112. The wide-angle imaging element 111 is a sensor capable of imaging over a wide range, whereas the telephoto imaging element 112 is a sensor capable of acquiring a finder image.

The control processor 4000 includes a CPU. The control processor 4000 executes, for example, various kinds of arithmetic operation.

It is to be noted that a program which describes operational steps to be performed by the operation unit 1300 of the surveying instrument 1000 can be stored in an electronic storage medium such as a FD, a CD, a DVD, a RAM, a ROM, and a memory card.

As shown in Fig. 5, the surveying instrument 1000 comprises: a telescope unit 4; a frame 3 for supporting the telescope unit 4 so that the telescope unit 4 can pivot up and down; and a base 2 for supporting the frame 3 so that the frame 3 can pivot horizontally. The base 2 can be connected to a tripod, or the like, through a leveling plate 1.

In the surveying instrument 1000, an operation panel which is part of the operation/input unit 5000 is formed. In addition, a display which is part of the display unit 4300 is attached to the surveying instrument 1000. Moreover, an objective lens is exposed in the telescope unit 4.

Incidentally, if there is a known point on an image, six reference points are required. However, processing as shown in Fig. 7 is also possible. To be more specific, in S91, reference points are measured. Then, in S92, an image including the reference points is acquired, before proceeding to the S81.

Second Embodiment

A second embodiment relates to a three-dimensional surveying instrument that uses target marks for three reference points that become path points.

A total station capable of measuring the distance to a reflecting prism which is placed at the reference points is used as the surveying instrument 1000. In addition, instead of the reflecting prism, it is also possible to use such a target mark that a mark is drawn on a reflection sheet.

Incidentally, an example of the relationship between data measured by the surveying instrument 1000 and an image acquired by the digital camera 3000 will be described as below.

Equation 1

$$x = -f\frac{a_{11}(X - Xc) + a_{12}(Y - Yc) + a_{13}(Z - Zc)}{a_{31}(X - Xc) + a_{32}(Y - Yc) + a_{33}(Z - Zc)}$$

$$y = -f\frac{a_{21}(X - Xc) + a_{22}(Y - Yc) + a_{23}(Z - Zc)}{a_{31}(X - Xc) + a_{32}(Y - Yc) + a_{33}(Z - Zc)}$$

where: f is the focal length of the digital camera 3000; a is ($\omega$, $\varphi$, $\kappa$ - roll, pitch, angle of yaw), which is a tilt (rotation angles of three axes) of the digital camera 3000; (X, Y, Z) is three-dimensional data measured by the surveying instrument 1000; and (Xc, Yc, Zc) are position coordinates of the digital camera 3000 relative to the surveying instrument 1000.

A base of the target mark is formed of a retroreflection sheet. A cross line indicating a collimation point, and a circle about the cross line, are drawn on the sheet. This circle makes the collimation easy in like manner. A bar code is drawn above the circle so that reading can be performed easily when a conversion into an image is made. A number is drawn below the circle so that a measurer can identify the target mark.

An adhesive is affixed to the back side of this target mark. This adhesive can be affixed to an arbitrary object. In addition, the target mark may also be combined with other affixing means other than the adhesive. For example, the target mark can also be affixed to a magnet on the sheet.

Incidentally, the target mark corresponds to a collimation target; and the circle about the cross line corresponds to a mark that makes the collimation easy.

The other configurations, working, and the like, of the second embodiment are similar to those described in the first embodiment except that the prism is used to measure the reference points. Therefore, the description thereof will be omitted.

Incidentally, image coordinates can also be converted into photograph coordinates. From these photograph coordinates, ground coordinates are calculated by use of a projective transformation equation. From these ground coordinates, photograph coordinates of a search image are determined by use of an inverse transformation equation of the projective transformation. It is also possible to search for a corresponding point by converting the photograph coordinates of the search image into image coordinates, and then by making use of a proper matching method.

Further, it is also possible to convert point data expressed as random three-dimensional coordinates into DEM (DIGITAL ELEVATION MODEL). To be more specific, the point data expressed as random three-dimensional coordinates is converted into data of triangulated irregular network (TIN), and then this TIN data is converted into DEM (DIGITAL ELEVATION MODEL) in a mesh formed of tetragonal lattices.

According to the invention an effect of acquiring correct three-dimensional coordinate data simply and easily is produced.

**Claims**

1. An apparatus for determining three-dimensional coordinate data of a target to be measured (10000), comprising:

   a surveying instrument (1000) configured for measuring at least three reference points (al, a2, a3) and at least three path points (b1, b2, b3) as collimation targets;
   at least one camera (3000) configured for acquiring, from a plurality of different directions, stereo images of the target including collimation targets (a1, a2, a3, b1, b2, b3); and
   an arithmetic processing means (4000) configured for calculating (S5) a tilt of the camera, including roll, pitch and yaw, from positions of the at least three measured reference points (a1, a2, a3) in the acquired stereo image and for calculating (S81) a tilt of the camera, including roll, pitch and yaw, from the positions of the path points (b1, b2, b3) corresponding to the path points measured by the surveying instrument (1000) for mutual orientation of the acquired stereo images,
   performing matching (S84) of the stereo images acquired by the camera;
   associating the position of the path points (b1, b2, b3) measured by the surveying instrument (1000) with the path points (b1, b2, b3) on the matched stereo images; and
   calculating (S85) three-dimensional coordinate data of the target to be measured (10000) on the basis of the association.

2. The apparatus according to claim 1, wherein:

   the surveying instrument (1000) is configured to be placed at a known point for measuring positions of at least three collimation points; and
   the arithmetic processing means is adapted to correct the tilt, a scaling factor, of the camera, and then to determine a position of the camera from the position of the collimation point and the stereo images acquired by the camera, and thereby to calculate three-dimensional coordinate data of the target to be measured, which is acquired by the camera.

3. The apparatus according to claim 1, wherein:

   the surveying instrument (1000) is configured to be placed at a known point for measuring positions of at least three collimation points; and
   the arithmetic processing means is adapted to correct the tilt, a scaling factor, of the camera, and then to determine coordinates of reference points (a1, a2, a3) from the position of the collimation point and the stereo images acquired by the camera to convert the coordinates of the reference points (a1, a2, a3) into those in a ground coordinate system, and thereby to calculate three dimensional coordinate data of the target to be measured.

4. The apparatus according to claim 1, wherein:

   a path point is a collimation point adapted to be generated manually or automatically.

5. A method for determining three-dimensional coordinate data of a target to be measured (10000), comprising:

   a first step (S2) of measuring the positions of at least three reference points (a1, a2, a3,) and at least three path points (b1, b2, b3) as collimation targets from distance data and angle data acquired by a surveying instrument (1000);
   a second step (S3) of acquiring, from different directions, stereo images including the collimation targets (a2, a3, b1, b2, b3) by a camera (3000);
   a third step (S5) of calculating a tilt of the camera, including roll, pitch and jaw, from positions of the at least three reference points (a1, a2, a3) included in the stereo images;
   a fourth step (S81) of calculating a tilt of the camera, including roll, pitch and yaw, from the positions of the path points (b1, b2, b3) for mutual orientation of the acquired stereo images;
   a fifth step (S84) of performing matching of the stereo images acquired by the camera with the path points (b1, b2, b3) being used as corresponding path points (b1, b2, b3);
   a sixth step (S85) of associating the position of the path points (b1, b2, b3) measured by the surveying instrument (1000) with path points (b1, b2, b3) on the matched stereo images; and
   a seventh step (S87) of calculating three-dimensional coordinate data of the target to be measured (10000) on the basis of the association acquired in the sixth step.

6. An electronic storage medium such as a FD, a CD, a DVD, a RAM, a ROM, and a memory card, comprising a stored program to perform the method steps of claim 5 when executed in a computer.

**Patentansprüche**

1. Vorrichtung zum Bestimmen dreidimensionaler Koordinatendaten eines zu messenden Ziels (10000), enthaltend:

   ein Vermessungsinstrument (1000), das konfiguriert ist zum Messen mindestens dreier Referenzpunkte (a1, a2, a3) und mindestens dreier Pfadpunkte (b1, b2, b3) als Kollimationsziele;
   mindestens eine Kamera (3000), die konfiguriert ist zum Aufnehmen, aus einer Mehrzahl unterschiedlicher Richtungen, von Stereobildern des Ziels einschließlich der Kollimationsziele (a1, a2, a3, b1, b2, b3); und
   ein arithmetisches Verarbeitungsmittel (4000), das konfiguriert ist
   zum Berechnen (S5) einer Neigung der Kamera, einschließlich Rollwinkel, Neigung und Gierung, aus Positionen der mindestens drei gemessenen Referenzpunkte (a1, a2, a3) im aufgenommenen Stereobild und zum Berechnen (S81) einer Neigung der Kamera, einschließlich Rollwinkel, Neigung und Gierung, aus den Positionen der Pfadpunkte (b1, b2, b3), die den Pfadpunkten entsprechen, die vom Vermessungsinstrument (1000) gemessen wurden, zur gegenseitigen Orientierung der aufgenommenen Stereobilder,
   zum gegenseitigen Zuordnen (S84) der von der Kamera aufgenommenen Stereobilder;
   zum Assoziieren der Position der Pfadpunkte (b1, b2, b3), die vom Vermessungsinstrument (1000) gemessen wurden mit den Pfadpunkten (b1, b2, b3) auf den zugeordneten Stereobildern; und
   zum Berechnen (S85) dreidimensionaler Koordinatendaten des zu messenden Ziels (10000) auf der Basis der Assoziation.

2. Vorrichtung nach Anspruch 1, worin:

   das Vermessungsinstrument (1000) konfiguriert ist, um an einem bekannten Punkt platziert zu werden zum Messen der Positionen von mindestens drei Kollimationspunkten; und
   das arithmetische Verarbeitungsmittel eingerichtet ist zum Korrigieren der Neigung, eines Skalierungsfaktors der Kamera und dann eine Position der Kamera zu bestimmen aus der Position des Kollimationspunktes und den von der Kamera aufgenommenen Stereobildern, um damit dreidimensionale Koordinatendaten des zu messenden Ziels zu berechnen, das von der Kamera aufgenommen wurde.

3. Vorrichtung nach Anspruch 1, worin:

   das Vermessungsinstrument (1000) konfiguriert ist, um an einem bekannten Punkt platziert zu werden zum Messen der Positionen von mindestens drei Kollimationspunkten; und
   das arithmetische Verarbeitungsmittel eingerichtet ist zum Korrigieren der Neigung, eines Skalierungsfaktors der Kamera und dann die Koordinaten von Bezugspunkten (a1, a2, a3) aus der Position des Kollimationspunktes und den von der Kamera aufgenommenen Stereobildern zu bestimmen, um die Koordinaten der Bezugspunkte (a1, a2, a3) in diejenigen eines Grundkoordinatensystems zu konvertieren und damit die dreidimensionalen Koordinatendaten des zu messenden Ziels zu berechnen.

4. Vorrichtung nach Anspruch 1, worin:

   ein Pfadpunkt ein Kollimationspunkt ist, der vorgesehen ist, um manuell oder automatisch erzeugt zu werden.

5. Verfahren zum Bestimmen dreidimensionaler Koordinatendaten eines zu messenden Ziels (10000), enthaltend:

   einen ersten Schritt (S2) zum Messen der Positionen mindestens dreier Referenzpunkte (a1, a2, a3) und mindestens dreier Pfadpunkte (b1, b2, b3) als Kollimationsziele aus Distanzdaten und Winkeldaten, die vom Vermessungsinstrument (1000) erhalten werden;
   einen zweiten Schritt (S3) zum Aufnehmen, aus unterschiedlichen Richtungen, von Stereobildern des Ziels einschließlich der Kollimationsziele (a1, a2, a3, b1, b2, b3) mit einer Kamera (3000);
   einen dritten Schritt (S5) zum Berechnen einer Neigung der Kamera, einschließlich Rollwinkel, Neigung und Gierung, aus Positionen der mindestens drei Referenzpunkte (a1, a2, a3), die in den Stereobildern enthalten sind;

einen vierten Schritt (S81) zum Berechnen einer Neigung der Kamera, einschließlich Rollwinkel, Neigung und Gierung, aus den Positionen der Pfadpunkte (b1, b2, b3) zur gegenseitigen Orientierung der aufgenommenen Stereobilder,

einen fünften Schritt (S84) zum gegenseitigen Zuordnen (S84) der von der Kamera aufgenommenen Stereobilder mit den Pfadpunkten (b1, b2, b3), die als entsprechende Pfadpunkte verwendet werden ;

einen sechsten Schritt (S85) zum Assoziieren der Position der Pfadpunkte (b1, b2, b3), die vom Vermessungsinstrument (1000) gemessen wurden, mit Pfadpunkten (b1, b2, b3) auf den zugeordneten Stereobildern; und

einen siebten Schritt (S87) zum Berechnen dreidimensionaler Koordinatendaten des zu messenden Ziels (10000) auf der Basis der Assoziation, die im sechsten Schritt erhalten wurde.

6. Elektronisches Speichermedium, wie beispielsweise eine Festplatte, eine CD, eine DVD, ein RAM, ein ROM und eine Speicherkarte, das ein gespeichertes Programm enthält, um die Verfahrensschritte nach Anspruch 5 durchzuführen, wenn es in einem Computer ausgeführt wird.

**Revendications**

1. Un équipement de détermination de données de coordonnées tridimensionnelles d'une cible à mesurer (10000), comprenant :

un instrument d'arpentage (1000) configuré pour mesurer au moins trois points de référence (a1, a2, a3) et au moins trois points de trajet (b1, b2, b3) en tant que cibles de collimation ;

au moins une caméra (3000) configurée pour l'acquisition, à partir d'une pluralité de directions différentes, d'images stéréo de la cible incluant les cibles de collimation (a1, a2, a3, b1, b2, b3) ; et

des moyens processeurs arithmétiques (4000) configurés pour :

le calcul (S5) d'une inclinaison de la caméra, incluant le roulis, le tangage et le lacet, à partir des positions des au moins trois points de référence mesurés (a1, a2, a3) dans l'image stéréo acquise et pour calculer (S81) une inclinaison de la caméra, incluant le roulis, le tangage et le lacet, à partir des positions des points de trajet (b1, b2, b3) correspondant aux points de trajet mesurés par l'instrument d'arpentage (1000) pour l'orientation mutuelle des images stéréo acquises,

l'exécution d'un rapprochement (S84) des images stéréo acquises par la caméra ;

l'association de la position des points de trajet (b1, b2, b3) mesurés par l'instrument d'arpentage (1000) avec les points de trajet (b1, b2, b3) sur les images stéréo rapprochées ; et

le calcul (S85) des données de coordonnées tridimensionnelles de la cible à mesurer (10000) sur la base de l'association.

2. L'équipement selon la revendication 1, dans lequel :

l'instrument d'arpentage (1000) est configuré pour être placé en un point connu pour la mesure des positions d'au moins trois points de collimation ; et

les moyens processeurs arithmétiques sont aptes à corriger l'inclinaison, un facteur d'échelle, de la caméra, puis à déterminer une position de la caméra à partir de la position du point de collimation et des images stéréo acquises par la caméra, et

calculer ainsi les données de coordonnées tridimensionnelles de la cible à mesurer, qui est acquise par la caméra.

3. L'équipement selon la revendication 1, dans lequel :

l'instrument d'arpentage (1000) est configuré pour être placé en un point connu pour la mesure des positions d'au moins trois points de collimation ; et

les moyens processeurs arithmétiques sont aptes à corriger l'inclinaison, un facteur d'échelle, de la caméra, puis à déterminer les coordonnées des points de référence (a1, a2, a3) à partir de la position du point de collimation et des images stéréo acquises par la caméra pour convertir les coordonnées des points de référence (a1, a2, a3) en ceux d'un système de coordonnées terrestres, et calculer ainsi les données de coordonnées tridimensionnelles de la cible à mesurer.

**4.** L'équipement selon la revendication 1, dans lequel :

un point de trajet est un point de collimation apte à être généré manuellement ou automatiquement.

**5.** Un procédé de détermination de données de coordonnées tridimensionnelles d'une cible à mesurer (10000), comprenant :

une première étape (S2) de mesure des positions d'au moins trois points de référence (a1, a2, a3) et d'au moins trois points de trajet (b1, b2, b3) en tant que cibles de collimation à partir de données de distance et de données d'angle acquises par un instrument d'arpentage (1000) ;
une seconde étape (S3) d'acquisition, depuis des directions différentes, d'images stéréo incluant les cibles de collimation (a2, a3, b1, b2, b3) par une caméra (3000) ;
une troisième étape (S5) de calcul d'une inclinaison de la caméra, incluant le roulis, le tangage et le lacet, à partir des positions des au moins trois points de référence (a1, a2, a3) inclus dans les images stéréo ;
une quatrième étape (S81) de calcul d'une inclinaison de la caméra, incluant le roulis, le tangage et le lacet, à partir des positions des points de trajet (b1, b2, b3) pour une orientation mutuelle des images stéréo acquises ;
une cinquième étape (S84) d'exécution d'un rapprochement des images stéréo acquises par la caméra avec les points de trajet (b1, b2, b3) ayant été utilisés comme points de trajet correspondants (b1, b2, b3) ;
une sixième étape (S85) d'association de la position des points de trajet (b1, b2, b3) mesurés par l'instrument d'arpentage (1000) avec des points de trajet (b1, b2, b3) sur les images stéréo rapprochées ; et
une septième étape (S87) de calcul de données de coordonnées tridimensionnelles de la cible à mesurer (10000) sur la base de l'association acquise à la sixième étape.

**6.** Un support de stockage électronique tel qu'un FD, un CD, un DVD, une RAM, une ROM, et une carte mémoire, comprenant un programme stocké pour mettre en oeuvre les étapes de procédé de la revendication 5 lorsqu'il est exécuté dans un calculateur.

FIG. 1

Point B

Point A (known point)

Point C

Scaling factor

X-axis rotation

Y-axis rotation

Z-axis rotation

FIG. 2

Image at point B

Surveyed data
+
Image at point A

Image at point C

Left Image

Right image

FIG. 3

Point A (known point)

FIG. 4

F I G ₀ 5

FIG. 6

120 — IMAGING CIRCUIT

110 — IMAGING ELEMENT

1100 — DISTANCE MEASURING UNIT

1110 — LIGHT-EMITTING UNIT

1120 — LIGHT-RECEIVING ELEMENT

10000

1410 — VERTICAL-ANGLE MEASURING UNIT

1420 — HORIZONTAL-ANGLE MEASURING UNIT

4000 — CONTROL PROCESSOR

4200 — STORAGE UNIT

5000 — OPERETION/INPUT UNIT

4300 — DISPLAY UNIT

14

EP 1 607 718 B1

EP 1 607 718 B1

FIG. 8

IN A CASE WHERE THERE IS A KNOWN
POINT ON AN IMAGE

PART OF THE PRESENT INVENTION

S91 — MEASURE REFERENCE POINTS(PATH POINTS)(SIX REFERENCE POINTS OR MORE)

S1 — PLACE A SURVEYING INSTRUMENT AT A KNOWN POINT(WITH AN IMAGING UNIT)

S92 — ACQUIRE IMAGES (INCLUDING THE REFERENCE POINTS) AT TWO IMAGING POINTS

S2 — MEASURING REFERENCE POINTS (AT LEAST THREE),AND ACQUIRE AN IMAGE

IMAGE COORDINATE SYSTEM

S81 — MUTUAL ORIENTATION(CALUCULATE, FROM THE PATH POINTS,A TILT, AND A SCALING FACTOR,OF THE CAMERA USED TO ACQUIRE THE IMAGES)

S3 — ACQUIRE IMAGES AT TWO IMAGING POINTS (BY A DIGITAL CAMERA)

S82 — CREATE A BIAS CORRECTION IMAGE (STEREO IMAGE)

S4 — INPUT THE IMAGES ACQUIRED BY THE CAMERA

IMAGE COORDINATE SYSTEM

S83 — GENERATE PATH POINTS (MANUARRY OR AUTOMATICALLY)

S5 — SINGLE PHOTO ORIENTATION (CALUCULATE,FROM THE REFERENCE POINTS,A TILT, AND A SCALING FACTOR,OF THE CAMERA USED TO ACQUIRE THE IMAGES)

S84 — STEREO MATCHING(ASOOCIATE TWO IMAGES WITH EACH OTHER)

S6 — COLLIMATION WITH A TARGET OBJECT (COLLIMATION POINT=PATH POINT)

S85 — THREE-DIMENSIONAL DATA IN AN IMAGE COORDINATE SYSTEM

S7 — GENERATE PATH POINTS FOR MUTUAL ORIENTATION

S86 — ABSOLUTE ORIENTATION (CONVERT COORDINATE OF THE REFERENCE POINTS INTO THOSE IN THE GROUND COORDINATE SYSTEM,DATA INCLUDING THREE POINTS IS SUFFICIENT)

S87 — THREE-DIMENSIONAL DATA IN THE GROUND COORDINATE SYSTEM

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004004706 A1
- DE 10328828 A1
- EP 0964223 A1
- EP 1335184 A2